# FASCICULE DE BREVET EUROPEEN

(11) **EP 4 165 591 B1**
(45) Date de publication et mention de la délivrance du brevet: **03.07.2024**
(21) Numéro de dépôt: 21734408.4
(22) Date de dépôt: 27.05.2021
(51) Int. Cl.: G06T 5/50

(54) **CORRECTION D'UN HALO DANS UNE IMAGE NUMÉRIQUE ET DISPOSITIF DE MISE EN OEUVRE DE CETTE CORRECTION**
KORREKTUR EINES HALOS IN EINEM DIGITALEN BILD UND VORRICHTUNG ZUR DURCHFÜHRUNG DIESER KORREKTUR
CORRECTION OF A HALO IN A DIGITAL IMAGE AND DEVICE FOR IMPLEMENTING SAID CORRECTION

(30) Priorité: 16.06.2020 FR 2006252
(43) Date de publication de la demande: 19.04.2023
(73) Titulaire: 4D View Solutions, 38000 Grenoble (FR)
(72) Inventeur: MENIER, Clément, 38100 GRENOBLE (FR); BONHOMME, Valentin, 38400 SAINT MARTIN D'HERES (FR)
(74) Mandataire: IP Trust
(86) Numéro de dépôt international: PCT/FR2021/050965
(87) Numéro de publication internationale: WO 2021/255361

(56) Documents cités:
- SHAIKH NAIMUDDIN ET AL: "Scatter-glare correction using a convolution algorithm with variable weighting", MEDICAL PHYSICS, AIP, MELVILLE, NY, US, vol. 14, no. 3, 1 mai 1987 (1987-05-01), pages 330-334, XP001375851, ISSN: 0094-2405
- SINGH MANDAKINEE ET AL: "Detection of glare in night photography", 2016 23RD INTERNATIONAL CONFERENCE ON PATTERN RECOGNITION (ICPR), IEEE, 4 décembre 2016 (2016-12-04), pages 865-870, XP033085695, DOI: 10.1109/ICPR.2016.7899744
- DELLEPIANE M ET AL: "Improved color acquisition and mapping on 3D models via flash-based photography", JOURNAL ON COMPUTING AND CULTURAL HERITAGE (JOCCH), ACM, 2 PENN PLAZA, SUITE 701 NEW YORK NY 10121-0701 USA, vol. 2, no. 4, 3 mars 2010 (2010-03-03), pages 1-20, XP058214830, ISSN: 1556-4673, DOI: 10.1145/1709091.1709092
- SERNA CITLALLI GÁMEZ ET AL: "Data Fusion of Objects Using Techniques Such as Laser Scanning, Structured Light and Photogrammetry for Cultural Heritage Applications", 21 février 2015 (2015-02-21), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 208 - 224, XP047504263, ISBN: 978-3-319-10403-4 [extrait le 2015-02-21] page 211 figure 1

## Description

### Domaine technique

L'invention concerne un procédé de correction d'un halo apparaissant dans une image numérique capturée lors d'une prise de vue photo ou vidéo et un dispositif de capture d'image destiné à mettre en œuvre ce procédé de correction de halo.

L'invention concerne plus particulièrement un procédé destiné à corriger l'effet de halo créé par des sources de lumière en vue d'un appareil de prise de vues et réduisant la qualité d'une image capturée par cet appareil par modification inhomogène de sa luminosité.

### Technique antérieure

Afin de réaliser des prises de vues d'une scène dans de bonnes conditions de luminosité, on emploie conventionnellement des systèmes d'éclairage artificiel pour éclairer cette scène.

En raison de l'intensité de la lumière produite par ces systèmes d'éclairage et de l'interaction de ces lumières avec les appareils de prise de vues, des artéfacts peuvent être générés dans les images capturées par ces appareils, se manifestant sous la forme d'éclaircissements diffus ou localisés impactant négativement leur qualité, en particulier en abaissant leur contraste et en générant des modifications inhomogènes de leur luminosité telles que blanchissement, facteurs de flare ou figures de diffraction.

Dans le cas de prises de vue conventionnelles avec par exemple une caméra unique utilisée en tant qu'appareil de prise de vue, les sources de lumière sont généralement placées hors du champ de la caméra de manière à éviter la génération des tels artefacts, et ce à des fins artistiques.

En outre, des corrections visuelles telles que des améliorations du contraste sont mises en oeuvre de façon routinière, également à des fins artistiques, c'est-à-dire selon des critères subjectifs.

Dans le cas d'un studio de modélisation tridimensionnelle d'une scène par photogrammétrie multi-vue tel que décrit dans les documents de brevet FR3016028 B1 et WO2019/166743 A1, les sources de lumière et les caméras sont réparties autour d'une scène à modéliser, et il est généralement impossible d'éviter la présence de sources de lumière dans les champs des caméras, entraînant les problèmes évoqués plus haut de dégradation de la qualité des images capturées par ces caméras.

La modélisation tridimensionnelle de la scène, basée sur une analyse tridimensionnelle des images est donc elle aussi négativement impactée par les artéfacts mentionnés plus haut.

La publication par DELLEPIANE M ET AL, "Improved color acquisition and mapping on 3D models via flash-based photography", JOURNAL ON COMPUTING AND CULTURAL HERITAGE (JOCCH), ACM, 2 PENN PLAZA, SUITE 701 NEW YORK NY 10121-0701 USA, vol. 2, no. 4, 3 mars 2010 (2010-03-03), pages 1-20, XP058214830, ISSN: 1556-4673, DOI: 10.1145/1709091.1709092D3, a pour but de supprimer les artefacts liés aux flashs lors de l'acquisition, ce qui constitue un problème analogue à celui des halos.

### Exposé de l'invention

Un objectif de l'invention est de corriger les artéfacts provoqués par les sources de lumière utilisées lors d'une prise de vues, l'ensemble de ces artéfacts étant désigné par le terme de halo, de manière à rendre les images numériques capturées par un appareil de prise de vue sensiblement telles qu'elles auraient été sans les distorsions de luminosité dues au halo.

A cet effet, l'invention a pour objet un procédé de correction d'un halo dans une image numérique à corriger d'une scène capturée dans un studio de modélisation tridimensionnelle par photogrammétrie au moyen d'un appareil de prise de vue ayant un champ de prise de vue de la scène, ce halo étant généré par l'interaction d'une lumière émise par une source de lumière avec l'optique de l'appareil de prise de vue et se manifestant par un éclaircissement de pixels de l'image numérique à corriger, ladite source de lumière faisant partie d'un système d'éclairage de la scène, le procédé comprenant les étapes consistant à générer une carte numérique d'intensité lumineuse caractérisant ladite source de lumière en répartition spatiale relativement au champ de prise de vue et en intensité lumineuse telle qu'elle est perçue depuis l'appareil de prise de vue lors de la capture de l'image à corriger, cette carte formant une première matrice de données, à fournir un noyau de convolution propre audit appareil de prise de vue, formant une deuxième matrice de données, à calculer un produit de convolution de la première matrice et de la deuxième matrice pour obtenir une troisième matrice de données correspondant à une carte de valeurs correctives du halo dans l'image numérique à corriger, et à soustraire pixel par pixel la carte de valeur corrective à l'image numérique à corriger pour obtenir une image corrigée dans laquelle le halo est absent.

Un premier avantage de l'invention est la correction d'un halo modifiant de manière inhomogène la luminosité d'une image capturée par un appareil de prise de vue, halo se manifestant par un ou plusieurs éclaircissements ou blanchissements localisés dans l'image lorsqu'il n'est pas corrigé.

Le procédé selon l'invention améliore ainsi très sensiblement le contraste et la reproduction des couleurs et des niveaux d'intensité lumineuse non seulement au sein d'une même image, mais également, dans le cas d'un studio comportant plusieurs appareils de prise de vue, entre des images capturées par ces différents appareils.

En outre, dans le cas d'une modélisation tridimensionnelle d'une scène par photogrammétrie multi-vue, la modélisation repose entre autres sur l'identité de couleur d'un élément donné d'une scène pour l'identifier et le suivre dans son mouvement à partir d'images capturées par plusieurs appareils de prise de vue.

La meilleure appréciation des couleurs dans les images traitées par le procédé selon l'invention permet donc une meilleure modélisation tridimensionnelle d'une scène.

Le procédé selon l'invention peut présenter les particularités suivantes :
- l'étape de génération de la carte numérique d'intensité lumineuse peut comprendre les étapes de générer une carte numérique préliminaire d'intensité lumineuse caractérisant ladite source de lumière en répartition spatiale relativement au champ de prise de vue et en intensité lumineuse telle qu'elle est perçue depuis l'appareil de prise de vue lorsque ladite source de lumière est entièrement visible de l'appareil de prise de vue, et de générer ladite carte numérique d'intensité lumineuse à partir de la carte numérique préliminaire et de l'image numérique à corriger, par détermination de pixels appartenant à ladite source de lumière dans la carte numérique préliminaire qui sont masqués et la caméra dans l'image numérique à corriger ;
- le noyau de convolution peut être une matrice générée à partir d'une somme d'une fonction unidimensionnelle ayant une enveloppe constamment décroissante et représentative de contributions de phénomènes de diffusion au noyau et d'une fonction bidimensionnelle et représentative de contributions d'une figure de diffraction au noyau ;
- le noyau de convolution peut être une matrice générée à partir d'une fonction isotrope constamment décroissante ;
- on peut générer le noyau de convolution au moyen des étapes d'acquérir une première et une deuxième image numérique d'apprentissage au moyen de l'appareil de prise de vues, ces deux images comprenant respectivement une source de lumière d'apprentissage éteinte et allumée, de générer une carte d'intensité lumineuse d'apprentissage de la source d'apprentissage à partir de la première image numérique d'apprentissage en attribuant une valeur d'intensité lumineuse aux pixels de cette deuxième image numérique compris dans la source de lumière, et de calculer le noyau à partir des deux images numériques d'apprentissage et de la carte d'intensité lumineuse.

L'invention s'étend à un dispositif de capture d'image pour studio de modélisation tridimensionnelle, comprenant une pluralité d'appareils de prise de vues fonctionnellement connectés à une unité de traitement de données, dans lequel ladite unité de traitement de données est spécialement adaptée pour mettre en oeuvre le procédé de correction d'un halo selon l'invention.

### Brève description des dessins

La présente invention sera mieux comprise et d'autres avantages apparaîtront à la lecture de la description détaillée du mode de réalisation pris à titre d'exemple nullement limitatif et illustré par les dessins annexés, brièvement décrits ci-dessous.
[Fig. 1] La figure 1 illustre une vue en coupe horizontale d'un studio de modélisation tridimensionnelle d'une scène par photogrammétrie multi-vue.
[Fig. 2] La figure 2 illustre un procédé d'établissement d'une carte d'intensité lumineuse.
[Fig. 3] La figure 3 illustre une variante du procédé illustré par la figure 2.
[Fig. 4] La figure 4 est un diagramme du procédé de correction d'un halo dans une image.
[Fig. 5] La figure 5 illustre une fonction de génération d'un noyau de convolution pour correction d'un halo.
[Fig. 6] La figure 6 illustre un noyau de convolution sous la forme d'une matrice.
[Fig. 7] La figure 7 est un diagramme d'un procédé de détermination d'un noyau de convolution.
[Fig. 8] La figure 8 illustre le procédé de la figure 7.
[Fig. 9] La figure 9 est un diagramme d'un procédé de détermination d'un noyau de convolution différent de celui de la figure 7.
[Fig. 10] La figure 10 illustre un dispositif de mise en oeuvre des procédés des diagrammes des figures 4, 7 et 9.

### Description d'un mode de mise en oeuvre du dispositif selon l'invention

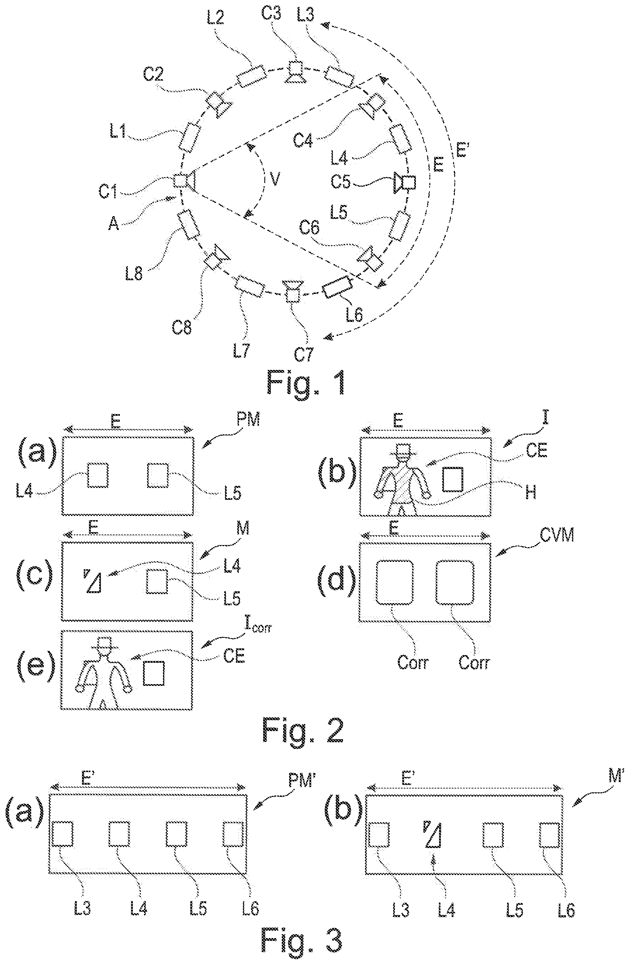

Ce mode de réalisation est décrit par les figures 1 à 10 et concerne l'application de l'invention à un studio de modélisation tridimensionnelle d'une scène par photogrammétrie multi-vue.

Le studio comprend des caméras Cl à C8 utilisées en tant qu'appareils de prise de vues, disposées autour d'une aire A où prennent place des scènes à modéliser à partir d'images numériques capturées par ces caméras.

Le studio comprend en outre des sources de lumière L1 à L8 également régulièrement disposées autour de l'aire A.

Le champ V de la caméra Cl englobe les sources de lumière L4 et L5, qui, en raison de leur forte intensité lumineuse et de leurs interactions avec les éléments optiques de la caméra Cl (lentilles, éventuellement diaphragme) sont sources d'artéfacts dans les images capturées, considérés collectivement comme un halo éclaircissant de manière inhomogène une image capturée par la caméra Cl.

Ce mode de réalisation consiste en la correction d'une image numérique d'une scène capturée par la caméra C1.

### Correction d'image

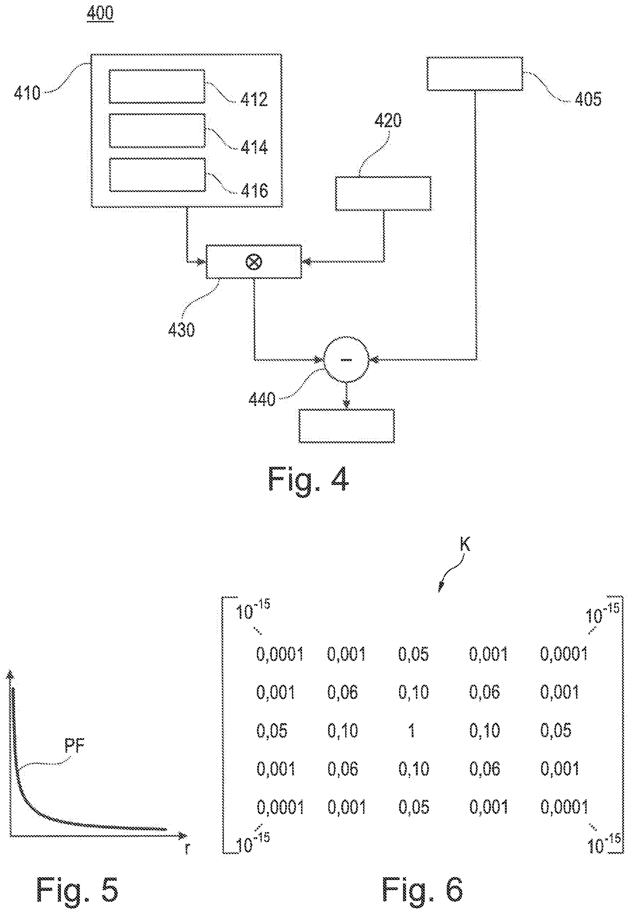

Le procédé de correction d'une image selon l'invention, illustré par le diagramme 400 de la figure 4, consiste à modéliser le halo généré par les sources de lumière dans une image à corriger capturée par la caméra Cl, puis à le soustraire de cette image de manière à obtenir une image corrigée débarrassée du halo.

Par souci de simplification, nous considérons ici le cas d'une image en niveaux de gris, considérant que le procédé s'applique de la même manière à des images en couleur, simplement en traitant en parallèle les différents canaux de couleur, tels qu'un canal rouge, un canal vert et un canal bleu.

L'étape 405 consiste à capturer une image numérique I à corriger au moyen de la caméra Cl et à la stocker en mémoire informatique, le halo H éclaircissant une certaine région de l'image, comme illustré par la région hachurée de la figure 2, schéma (b).

L'étape 410 consiste à générer une carte numérique M d'intensité lumineuse indiquant des répartitions spatiales et des intensités des sources de lumière se trouvant en vue de la caméra Cl.

Dans un premier exemple de ce mode de réalisation, on ne corrige que le halo généré par les surfaces émettrices de lumière des sources de lumière directement visibles par la caméra Cl, L4 et L5.

Chaque source de lumière visible de la caméra peut être considérée comme un ensemble de sources élémentaires de lumière chacune visible dans l'image à corriger sous la forme d'un pixel saturé.

On entend par pixel saturé un pixel affichant un niveau de luminosité à la valeur maximale, 255 dans le cas d'une luminosité codée sur 8 bits dans une image numérique.

Le schéma (c) de la figure 2 illustre les sources de lumière L4 et L5 situées dans le champ V de la caméra Cl telles que vues par la caméra Cl lors de la capture de l'image à corriger, pixel par pixel, la source L4 étant partiellement masquée à la caméra Cl par le personnage CE de la scène illustrée dans le schéma (b).

Ce schéma (c) correspond ici exactement à une image du champ V de la caméra Cl selon une étendue horizontale E correspondant à l'étendue horizontale E du champ de la caméra Cl.

L'étape 410 peut alors comprendre les sous-étapes 412, 414 et 416.

La sous-étape 412 consiste à générer une carte numérique d'intensité lumineuse du studio à vide, c'est-à-dire avec les sources lumineuses entièrement visibles de la caméra Cl, par détermination des pixels saturés d'une image du studio à vide avec les sources de lumière L4 et L5 allumées, puis à affecter à ces pixels l'intensité lumineuse des sources de lumière, de manière à aboutir à une carte numérique préliminaire d'intensité lumineuse PM.

Le schéma (a) de la figure 2 illustre la carte préliminaire PM, correspondant à une image du champ V d'étendu E de la caméra Cl comprenant uniquement les sources de lumière L4 et L5 telles que vues par la caméra Cl, ces sources étant ici des surfaces lumineuses rectangulaires.

Cette carte d'intensité lumineuse est une première matrice de pixels qui correspondent en position aux pixels de l'image numérique I à corriger, la valeur de luminosité des sources de lumière étant affectée aux pixels de la carte appartenant à une surface émettrice de lumière vue par la caméra Cl, les autres pixels ayant une valeur essentiellement nulle.

L'intensité lumineuse est ici relative à la luminosité maximale atteignable par un pixel saturé dans l'image à corriger.

Sur une base arbitraire de luminosité consistant à attribuer 1 comme valeur d'intensité lumineuse juste suffisante pour saturer un pixel d'une image à corriger, la luminosité des sources de lumière peut atteindre plusieurs milliers, 10000 par exemple, et peut être mesurée par des moyens conventionnels.

Par exemple, par réglage de la plage de sensibilité à la lumière de la caméra Cl, celle-ci peut directement mesurer l'intensité lumineuse des sources de lumière pixel par pixel en évitant de saturer les pixels, et générer ainsi la carte préliminaire d'intensité lumineuse PM, qui constitue une image numérique de référence du champ de l'appareil de prise de vue.

En procédant de cette manière, on ne prend en compte que les sources de lumière situées dans le champ V de la caméra Cl, qui sont aussi les sources de lumière dégradant généralement le plus l'image à corriger.

Il est également possible d'entrer manuellement les positions et les intensités des sources de lumière dans un fichier informatique de manière à générer une carte d'intensité lumineuse du studio à vide.

La sous-étape 414 consiste à identifier, par des moyens conventionnels de traitement d'images, les pixels de la carte PM appartenant à une source de lumière se retrouvant comme pixels non saturés dans l'image à corriger I illustrée par la figure 2, schéma (b).

Cette étape permet d'identifier les pixels des surfaces lumineuses de la carte préliminaire PM qui sont masquées à la caméra Cl par un élément d'une scène tel que le personnage CE de la figure 2, schéma (b).

La sous-étape 416 consiste à attribuer une valeur essentiellement nulle aux pixels identifiés à l'étape 414 de manière à obtenir la carte M d'intensité lumineuse illustrée par la figure 2, schéma (c), représentative des sources de lumière directement vues par la caméra Cl lors de l'acquisition de l'image I à corriger, indiquant leurs positions et intensités lumineuses respectives dans le champ de la caméra.

Les sources de lumière peuvent avoir des intensités inhomogènes spatialement dans la carte M d'intensité lumineuse, par exemple pour refléter une situation d'une source constituée d'un panneau de diodes électroluminescentes très brillantes placées derrière un panneau diffuseur ne diffusant qu'imparfaitement la lumière des diodes, les laissant apparaître sous forme de petites surfaces localisées d'intensités lumineuses plus fortes que leur environnement.

L'étape 420 du diagramme 400 consiste à fournir un noyau K de convolution adapté à la caméra Cl, on peut considérer ce noyau comme un noyau de génération de halo propre à la caméra Cl, ce noyau formant une deuxième matrice de données.

Ce noyau est une matrice traduisant l'influence d'un point d'une source de lumière sur la luminosité de chaque point de l'image capturée par le capteur d'image numérique de la caméra et qui est à corriger.

La caméra est caractérisée par son système optique (lentilles, diaphragme) et son capteur, formé d'une matrice de pixels photosensibles.

On peut définir le noyau comme une matrice dont chaque élément traduit l'influence d'un pixel d'une carte numérique d'intensité lumineuse sur les pixels d'une image numérique à corriger, comme expliqué ci-dessous.

On rappelle qu'une image numérique est une matrice de données, chaque donnée exprimant une intensité lumineuse du pixel correspondant de l'image.

Le halo n'est principalement perceptible que lorsque la source de lumière est forte par rapport au niveau d'intensité lumineuse de la scène dont une image est capturée, ce qui est le cas des sources de lumière du studio.

En outre, chaque pixel de la carte d'intensité lumineuse appartenant à une source lumineuse peut être considéré comme une source élémentaire de lumière générant son propre halo.

Or, le halo global de l'image à corriger résulte d'un phénomène additif, les effets de chaque source de lumière ou chaque région d'une source de lumière s'ajoutant à ceux des autres sources de lumière ou régions de sources de lumière.

Ainsi, le halo de l'image numérique à corriger est l'addition de l'ensemble des halos propres à chacun des pixels de la carte numérique M, et peut être calculé par la convolution, ou produit de convolution, de la carte d'intensité lumineuse et d'un noyau K de convolution modélisant les effets d'une source élémentaire de lumière sur la capture d'une image par la caméra.

Pour cette raison, même si le halo généré par une surface élémentaire d'une source de lumière reste localisé et peu perceptible, le halo généré par les sources de lumière considérées dans leur ensemble a un impact et une portée beaucoup plus importants, ce qui doit être pris en compte par le noyau.

Les inventeurs ont ainsi l'expérience de sources de lumière situées dans une image à corriger générant un phénomène de halo sensible sur un rayon équivalent à un quart d'une largeur de l'image, de sorte que dans une telle situation le noyau devra avoir une taille double, donc équivalente à la moitié de la taille en pixel de l'image.

Pour le cas d'un noyau carré et d'une image de 2000 pixels de largeur, le noyau pourra ainsi correspondre à une matrice à deux dimensions de 1000×1000 éléments, les effets du halo s'étendant sur un rayon de 500 pixels depuis une source de lumière considérée, telle qu'un pixel d'une image d'une surface lumineuse d'un système d'éclairage artificiel.

Le halo dont on cherche à corriger les effets est généré par l'interaction d'une ou plusieurs sources de lumière avec l'optique de la caméra capturant les images à corriger, en particulier les lentilles et le diaphragme, et est donc propre au système optique de la caméra utilisée.

On peut considérer le cas simple, mais d'application générale, d'un halo isotrope généré par la diffusion multiple de la lumière reçue par les lentilles de l'optique de la caméra, entraînant un éclaircissement inhomogène de l'image capturée par celle-ci.

L'effet du halo isotrope sur un pixel de l'image décroît rapidement avec l'éloignement apparent de ce pixel par rapport à un pixel donné d'une source de lumière et dépend uniquement de cet éloignement puisque nous nous limitons ici à un effet isotrope.

On peut déterminer empiriquement un noyau adéquat pour corriger l'image affectée par ce halo isotrope, sur la base d'une fonction paramétrique isotrope, d'abord rapidement décroissante puis tendant asymptotiquement vers 0, qui traduit l'influence locale, isotrope et rapidement décroissante d'un pixel d'une source de lumière sur une image à corriger.

La figure 5 représente de façon générique une telle fonction paramétrique PF définie à l'aide de paramètres et variant en fonction d'un rayon r qui représente dans le cas de notre noyau l'éloignement à la source de lumière considérée.

La figure 6 illustre un noyau K de convolution, matrice modélisant pour une caméra particulière l'effet d'une source lumineuse sur l'image, dérivé de la fonction de la figure 5 par numérisation spatiale sur un nombre de points correspondant à une distance du capteur de la caméra Cl sur laquelle le halo a une influence perceptible (1000 points dans l'exemple ci-dessus).

Les éléments de cette matrice sont définis de manière à avoir des valeurs variant avec leur éloignement par rapport au centre de la matrice selon la fonction paramétrique PF, chaque donnée de la matrice correspondant à un pixel et étant considéré comme éloigné de ses plus proches voisins d'une distance égale au pas des pixels du capteur de la caméra.

Le noyau K de la figure 6 illustre cette construction, avec des données de valeurs décroissant avec leurs éloignements respectifs par rapport au centre de la matrice selon la fonction paramétrique PF décroissante.

Pour illustration, la donnée centrale du noyau a ici une valeur de 1 et les données les plus éloignées du centre ont une valeur de 10⁻¹⁵, mais cela ne représente bien sûr qu'un cas particulier pris pour exemple.

En appliquant ce noyau à la correction de l'image comme décrit ci-dessous, puis en réglant manuellement les paramètres de la fonction paramétrique PF au vu des résultats de la correction pour l'adapter au système de prise de vue employé et améliorer la correction, on modifie le noyau par itérations successives jusqu'à obtenir un niveau de correction satisfaisant.

Du fait de la situation particulière que représente chaque système de prise de vue, il n'est pas possible de définir une ou plusieurs fonctions paramétriques précises applicables à tous les systèmes, de sorte que la phase de réglage décrite ci-dessus est, sauf application de la méthode d'apprentissage du noyau décrite plus bas, incontournable.

Chaque praticien pourra, en fonction du type de caméra qu'il utilise et de ses expériences et préférences personnelles en matière de calcul, choisir un ou plusieurs types de fonctions paramétriques.

L'étape 430 du procédé de correction de l'image consiste à calculer une carte CVM de valeurs correctives illustrée par l'image du schéma (d) de la figure 2, dont chaque pixel correspond à un pixel de l'image à corriger, en effectuant le produit de convolution de la carte M des intensités lumineuses et du noyau K de convolution, cette carte formant une troisième matrice de données.

La carte CVM comporte des régions Corr de correction avec des valeurs non nulles correspondant au halo généré par les sources de lumière de la carte M de puissance lumineuse, les pixels des autres régions de la carte CVM ayant des valeurs nulles, non correctrices.

L'étape 440 du procédé consiste à calculer une image corrigée Icorr illustrée par le schéma (e) de la figure 2, en soustrayant la carte CVM de valeurs correctives de l'image I à corriger, pixel par pixel, pour obtenir une image corrigée dans laquelle le halo est absent.

Il est entendu que l'expression « pour obtenir une image corrigée dans laquelle le halo est absent » exprime un objectif idéal ne pouvant pas être en pratique complètement atteint, c'est-à-dire qu'une élimination complète du halo est l'objectif visé, mais que la mise en oeuvre et les avantages du procédé ne requièrent pas une élimination parfaite du halo de l'image à corriger.

Dans ce document, soustraire une première image d'une deuxième image revient à soustraire pour chaque pixel les valeurs de luminosité de la première image aux valeurs de luminosités respectives de la deuxième image.

Enfin, l'étape 450 consiste à enregistrer en mémoire informatique l'image corrigée calculée à l'étape 440.

La figure 3 représente une variante dans l'établissement d'une carte d'intensité lumineuse M', différant du procédé de la figure 2 en ce que la carte de d'intensité lumineuse est une image de taille arbitraire d'étendue E' couvrant de préférence un champ plus large que celui de la caméra Cl de manière à englober celui-ci.

On peut par exemple entrer manuellement les positions des sources de lumière comprises dans cette étendue E par rapport au champ de la caméra Cl, les insérer dans une image ayant une surface en pixel englobant l'image à corriger, puis affecter à ces positions des intensités lumineuses mesurées de manière conventionnelle afin d'obtenir la carte préliminaire PM' d'intensité lumineuse illustrée par le schéma (a) de la figure 3.

Pour des raisons de commodité pour les calculs, chaque pixel de l'image I à corriger correspond préférablement exactement à un pixel de la carte préliminaire PM'.

D'un point de vue pratique, la carte PM' peut également être obtenue en modifiant l'orientation de la caméra Cl pour capturer des vues de l'ensemble de l'étendue E' avec une plage de sensibilité à la lumière adéquate, puis en combinant ces vues de manière conventionnelle pour former la carte préliminaire PM'.

Il est alors possible d'établir, en mettant en oeuvre les sous-étapes 414 et 416, une carte d'intensité lumineuse M', illustrée par la figure 3, schéma (b), adaptée à la correction de l'image à corriger I de la figure 2, schéma (b).

Cette carte, d'étendue E' plus grande que l'étendue E, prend en compte non seulement les sources de lumière L4 et L5 situées dans le champ de la caméra Cl, mais aussi les sources de lumières L3 et L6 situées hors du champ V de la caméra Cl et donc non visibles dans l'image I à corriger, mais susceptibles de participer de manière significative au halo dégradant la qualité de cette dernière.

En utilisant cette carte d'intensité lumineuse dans le procédé de correction 400, il est possible de corriger un halo généré non seulement par les sources de lumière comprises dans l'image à corriger, mais également par des sources de lumière situées hors de l'image à corriger, améliorant ainsi la qualité de la correction.

### Noyau - Procédé d'apprentissage

La procédure de correction d'image décrite plus haut peut utiliser un noyau de convolution obtenu empiriquement comme expliqué précédemment, ou bien un noyau obtenu par calcul au moyen d'une procédure d'apprentissage.

Nous allons détailler deux procédures d'apprentissage possibles, chacune permettant de calculer un noyau de convolution de génération d'un halo pour un appareil de prise de vues donné, au moyen de deux images d'apprentissage capturées par cet appareil de prise de vues et représentant respectivement une source de lumière allumée et la même source de lumière éteinte.

Ces procédures reposent sur les bases selon lesquelles l'une de ces deux images permet de déterminer une carte d'intensité lumineuse telle que définie plus haut et la différence entre ces images permet de déterminer le halo créé par la source de lumière en interaction avec l'appareil de prise de vue considéré.

A partir de ces données, et connaissant la façon dont le halo est généré à partir de la carte de puissance lumineuse et du noyau de convolution recherché, on peut utiliser des méthodes conventionnelles de calcul pour remonter à ce noyau.

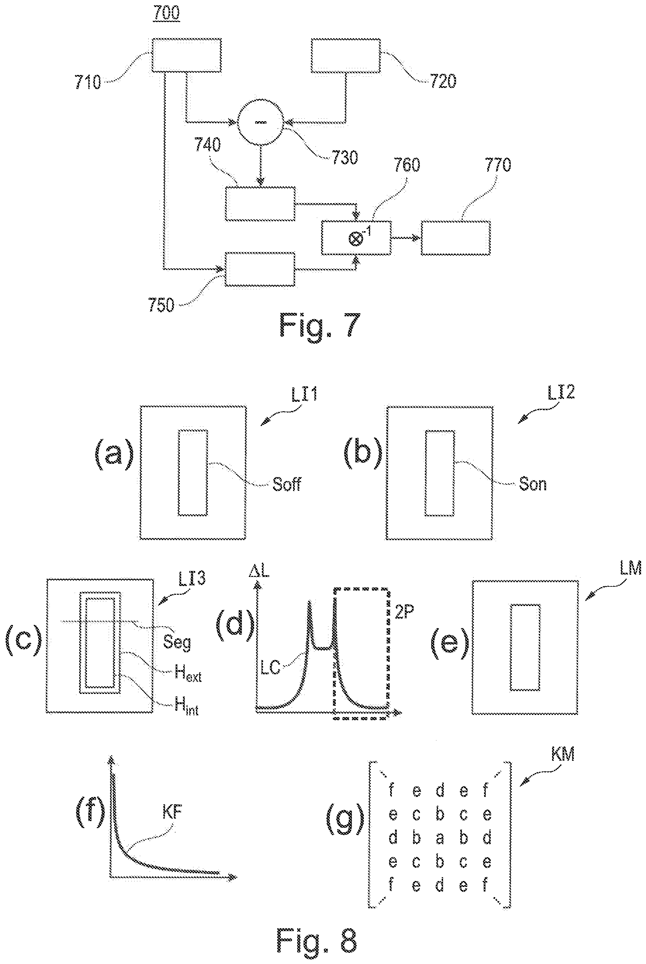

Une première procédure d'apprentissage est illustrée par le diagramme 700 de la figure 7 et les schémas (a) à (f) de la figure 8 et met en œuvre une déconvolution.

Une étape 710 consiste à capturer une première image numérique LI1 d'apprentissage englobant une source de lumière éteinte Soff, identifiée par Soff dans la figure 8, schéma (a), au moyen du système de prise de vue dont on souhaite calculer un noyau de génération de halo.

Il peut s'agir de l'appareil de prise de vues employé pour capturer une image à corriger, ou bien d'un autre appareil du même modèle équipé de la même optique.

Une étape 720 consiste à capturer une deuxième image numérique LI2 d'apprentissage englobant la même source de lumière, mais allumée cette fois, dans les mêmes conditions que l'image capturée lorsqu'elle était éteinte, identifiée par Son dans la figure 8, schéma (b).

Il est à noter que, en raison du halo provoqué par la lumière de la source de lumière, la surface occupée par celle-ci apparaîtra plus importante dans les images capturées lorsqu'elle est allumée que lorsqu'elle est éteinte.

Une étape 730 consiste à soustraire la première image LI1 de la deuxième image LI2, ce qui permet d'obtenir une troisième image numérique LI3 comprenant des portions représentant le halo généré par l'interaction de la source de lumière avec l'appareil de prise de vue.

Sur le schéma (c) de la figure 8, les régions Hint et Hext représentent respectivement des régions de halo situées à l'intérieur et à l'extérieur de la source de lumière éteinte du schéma (a) de la figure 8.

Une étape 740 consiste à extraire une courbe LC de la troisième image LI3, cette courbe LC représentant la différence de luminosité ΔL entre les images LI1 et LI2 le long d'un segment Seg traversant la source de lumière, comme illustré par la figure 8, schéma (d).

On considère alors qu'une portion P de la courbe LC correspondant à une périphérie extérieure de la source de lumière, traversant la région Hext et incluant un maximum de la courbe LC est représentative du halo et permet de remonter au noyau.

Inversement, on considère que la région Hint ne fournit pas d'information exploitable en pratique pour déterminer le noyau.

Une étape 750 consiste à générer une carte LM, d'intensité lumineuse d'apprentissage, illustrée par la figure 8, schéma (e), par exemple à partir de la première image LI1 en attribuant aux pixels considérés comme faisant partie de la source de lumière une valeur d'intensité lumineuse de la source mesurée de manière conventionnelle.

Par exemple, un pixel peut être considéré comme faisant partie de la source de lumière lorsqu'il dépasse un niveau donné d'intensité lumineuse, ce niveau donné d'intensité lumineuse étant choisi par un opérateur de manière à distinguer la source de lumière éteinte du fond de l'image LI1.

La carte LM d'intensité lumineuse d'apprentissage pourrait également être obtenue manuellement comme décrit plus haut pour l'obtention de la carte préliminaire d'intensité lumineuse PM.

A partir de la portion P de la courbe LC et de la carte d'intensité lumineuse d'apprentissage LM, on peut déterminer une fonction KF de génération du noyau, puis le noyau de convolution recherché KM lui-même sous la forme d'une matrice, qui sera utilisée par la suite dans le procédé de correction d'image détaillé plus haut.

Plus spécifiquement, en considérant que la fonction représentée par la courbe LC dans la région P est le résultat de la convolution de la carte d'intensité lumineuse d'apprentissage LM et du noyau que l'on cherche à obtenir, une opération 760 de déconvolution de la courbe LC par la carte LM permet de déterminer une fonction KF de génération du noyau, déconvolution opérée au moyen d'une unité de traitement de données numériques telle qu'un processeur d'ordinateur.

Enfin, une étape 770 de numérisation spatiale de la fonction KF sur un nombre de points correspondant à une distance en pixels du capteur de l'appareil de prise de vue sur laquelle le halo a une influence perceptible permet de déterminer le noyau, c'est-à-dire les éléments de la matrice KM.

Les éléments de la matrice KM sont définis à partir de la fonction KF comme le noyau K de la figure 6 est dérivé de la fonction PF de la figure 5, de manière à obtenir la matrice KM de la figure 8, schéma (g), avec des données ayant des valeurs b à f décroissant dans cet ordre avec leurs éloignements respectifs par rapport au centre de la matrice occupé par l'élément a, selon la fonction décroissante KF.

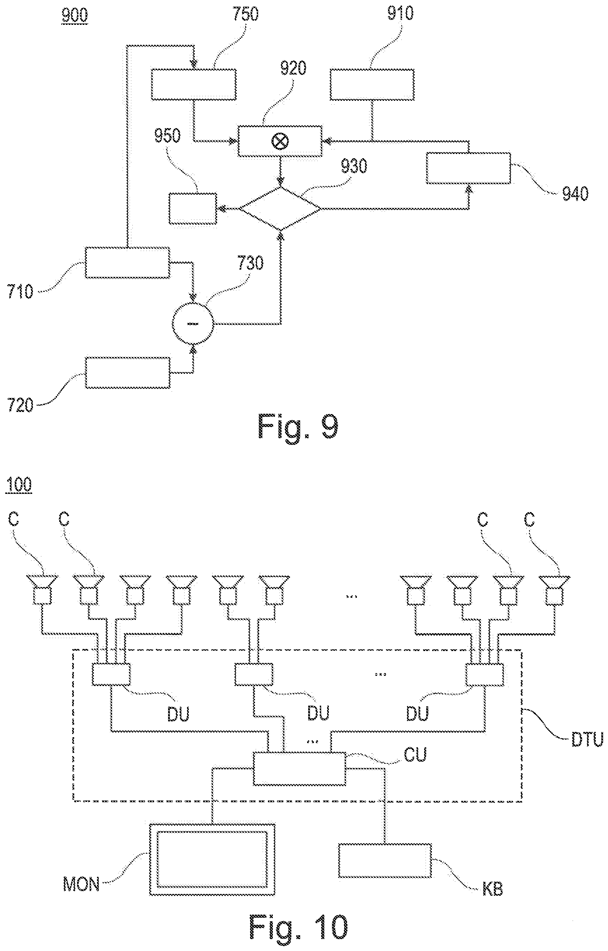

Une deuxième procédure d'apprentissage est illustrée par le diagramme 900 de la figure 9 et permet d'approximer une fonction de génération du noyau par des méthodes mathématiques conventionnelles d'approximations par régression telles que des approximations par régression polynomiale.

Pour les étapes du diagramme 900 ayant les mêmes identifiants que des étapes du diagramme 700, on peut se reporter aux explications précédentes.

On considère que l'image LI3 obtenue de l'étape 730 correspond au halo généré par la source de lumière allumée Son.

Or, ce halo se modélise par le produit de convolution du noyau de convolution recherché et de la carte d'intensité lumineuse LM obtenue à l'issue de l'étape 750.

On comprend donc qu'on peut remonter au noyau de convolution recherché par approximations successives du noyau visant à faire converger le résultat du produit de convolution et l'image LI3.

Concrètement, on peut fournir un noyau initial à une étape 910, effectuer son produit de convolution avec la carte d'intensité lumineuse LM au cours d'une étape 920, puis comparer le produit de convolution obtenu à l'image LI3 au cours d'une étape de test 930.

Si, selon des critères choisis par le praticien, on détermine au cours de l'étape de test que l'image LI3 résultant de l'étape 730 et le résultat du produit de convolution de l'étape 920 sont trop éloignés l'un de l'autre, on calcule, au moyen d'une unité de traitement de données, un nouveau noyau selon des méthodes conventionnelles de régression au cours d'une étape 940, que l'on réinjecte dans le produit de convolution à la place du noyau initial de l'étape 910, puis on réitère en boucle les étapes 920 à 940, jusqu'à ce que l'étape 930 de test indique une convergence suffisante du produit de convolution vers l'image LI3.

Une fois que l'on a obtenu la convergence suffisante, on enregistre au cours d'une étape 950 le dernier noyau calculé dans une mémoire informatique en tant que noyau de convolution recherché, similaire au noyau KM obtenu par le procédé illustré par le diagramme 700 et les figures 7 et 8.

Les exemples ci-dessus sont limités à des cas de halos isotropes générés par un noyau lui-même isotrope, le noyau étant calculé au moyen d'une fonction unidimensionnelle ne représentant les variations d'intensité lumineuse que dans une seule direction, la direction radiale, et qui est suffisante pour caractériser les contributions isotropes au halo.

Un tel noyau isotrope est généralement suffisant, puisque l'on peut souvent négliger, par exemple, les effets de diffraction du diaphragme, effectivement négligeables pour un diaphragme utilisant une grande ouverture.

En cas de diffraction du diaphragme non négligeable, on peut additionner à une fonction unidimensionnelle, représentant les contributions isotropes au noyau, une fonction bidimensionnelle ayant une symétrie du même ordre que le diaphragme pour représenter les contributions de sa diffraction au noyau, puis procéder de la même manière que précédemment pour une détermination empirique ou par apprentissage du noyau.

Ce principe s'applique à tout type d'effet optique participant à la génération d'un halo dans une image à corriger.

D'une manière générale, le noyau de convolution peut être généré à partir d'une somme d'une fonction unidimensionnelle ayant une enveloppe constamment décroissante et représentative de contributions isotropes au noyau et d'une fonction bidimensionnelle et représentatives de contributions anisotropes au noyau.

Les contributions isotropes au noyau peuvent en particulier provenir de phénomènes de diffusion par les lentilles de l'appareil de prise de vue considéré.

Les contributions anisotropes au noyau peuvent en particulier provenir de phénomènes de diffraction, visualisés par exemple sous la forme de figures de diffraction dans une image à corriger.

Dans un tel cas, la fonction bidimensionnelle peut correspondre à une fonction représentative d'une figure de diffraction et ayant un même ordre de symétrie que cette figure, ou à une somme de telles fonctions.

La figure 10 illustre un dispositif 100 de capture d'image pour studio de modélisation tridimensionnelle, qui est adapté à la mise en oeuvre du procédé de correction d'un halo selon l'invention.

Ce dispositif comprend une pluralité de caméras C utilisées en tant qu'appareils de prise de vues, chacune reliée à une unité de traitement de données numériques DTU comprenant une unité de centralisation de données et de calcul CU et des unités décentralisées DU faisant l'interface entre l'unité de centralisation de données CU et chacune des caméras C.

Un moniteur de contrôle MON relié à l'unité de centralisation permet de visualiser les images capturées par le système et une unité KB de saisies de données numériques telle qu'un clavier numérique permet d'entrer des ordres dans l'unité de traitement de données.

Le moniteur MON et l'unité KB peuvent servir par exemple pour affiner le noyau employé par le procédé de correction d'un halo dans le cas d'une détermination empirique du noyau, par estimation visuelle, par un opérateur, de la qualité de la correction du halo dans les images et la modification manuelle des paramètres de la fonction de génération du noyau par cet opérateur.

Dans cet exemple, chacune des unités décentralisées DU comprend une mémoire dans laquelle sont stockés le noyau de convolution adapté au modèle des caméras du dispositif.

On stocke également dans ces unités décentralisées des cartes d'intensité lumineuse chacune spécifique à une caméra, associée à la configuration du studio de modélisation dans lequel le dispositif est intégré et fonction de la disposition des caméras concernées et des systèmes d'éclairage.

Ces unités décentralisées sont agencées pour traiter les images capturées au moyen du procédé de correction d'un halo selon l'invention, en employant les cartes d'intensité lumineuse et le noyau stockés en mémoire.

Bien entendu, ce système peut également être adapté à la mise en oeuvre d'une procédure d'apprentissage du noyau de convolution.

Il est à noter que les images mentionnées dans cette description peuvent avoir ou non subi des traitements numériques destinés, par exemple, à améliorer leur contraste ou leur netteté, et peuvent chacune être comprises comme une image numérique unique capturée à un instant donné, ou comme une moyenne de plusieurs images numériques capturées à des instants différents.

Il va de soi que la présente invention ne saurait être limitée au mode de réalisation exposé plus haut, susceptible de subir des modifications sans pour autant sortir du cadre de l'invention.

## Revendications

1. Procédé (400) de correction d'un halo (H) dans une image numérique (I) à corriger d'une scène capturée dans un studio de modélisation tridimensionnelle par photogrammétrie au moyen d'un appareil (C1) de prise de vue ayant un champ (V) de prise de vue de la scène, ce halo étant généré par l'interaction d'une lumière émise par une source de lumière (L3, L4, L5, L6) avec l'optique de l'appareil de prise de vue et se manifestant par un éclaircissement de pixels de l'image numérique à corriger, ladite source de lumière faisant partie d'un système d'éclairage de la scène, ledit procédé comprenant les étapes consistant à :
- générer (410) une carte numérique (M) d'intensité lumineuse caractérisant ladite source de lumière en répartition spatiale relativement au champ de prise de vue et en intensité lumineuse telle qu'elle est perçue depuis l'appareil de prise de vue lors de la capture de l'image (I) à corriger, cette carte formant une première matrice de données ;
- fournir (420) un noyau de convolution propre audit appareil de prise de vue, formant une deuxième matrice de données ;
- calculer (430) un produit de convolution de la première matrice et de la deuxième matrice pour obtenir une troisième matrice de données correspondant à une carte (CVM) de valeurs correctives du halo dans l'image numérique à corriger ; et
- soustraire (440) pixel par pixel la carte de valeur corrective à l'image numérique à corriger pour obtenir une image corrigée (Icorr) dans laquelle le halo est absent.

2. Procédé (400) de correction d'un halo selon la revendication 1, dans lequel l'étape de génération de la carte numérique (M) d'intensité lumineuse comprend les étapes de :
- générer (412) une carte numérique préliminaire (PM) d'intensité lumineuse caractérisant ladite source de lumière en répartition spatiale relativement au champ de prise de vue et en intensité lumineuse telle qu'elle est perçue depuis l'appareil de prise de vue lorsque ladite source de lumière est entièrement visible de l'appareil de prise de vue ; et
- générer (414, 416) ladite carte numérique (M) d'intensité lumineuse à partir de la carte numérique préliminaire (PM) et de l'image numérique (I) à corriger, par détermination de pixels appartenant à ladite source de lumière dans la carte numérique préliminaire qui sont masqués à la caméra dans l'image numérique (I) à corriger.

3. Procédé de correction d'un halo selon la revendication 1 ou 2, dans lequel le noyau (K) de convolution est une matrice générée à partir d'une somme d'une fonction unidimensionnelle ayant une enveloppe constamment décroissante et représentative de contributions de phénomènes de diffusion au noyau et d'une fonction bidimensionnelle et représentative de contributions d'une figure de diffraction au noyau.

4. Procédé de correction d'un halo selon la revendication 1 ou 2, dans lequel le noyau (K) de convolution est une matrice générée à partir d'une fonction (PF) isotrope constamment décroissante.

5. Procédé de correction d'un halo selon l'une quelconque des revendications 1 à 4, dans lequel l'on génère le noyau de convolution au moyen des étapes de :
- acquérir (710, 720) une première (LI1) et une deuxième (LI2) image numérique d'apprentissage au moyen de l'appareil de prise de vues, ces deux images comprenant respectivement une source de lumière d'apprentissage éteinte (Soff) et allumée (Son) ;
- générer (750) une carte (LM) d'intensité lumineuse d'apprentissage de la source d'apprentissage à partir de la première image numérique d'apprentissage en attribuant une valeur d'intensité lumineuse aux pixels de cette deuxième image numérique compris dans la source de lumière ; et
- calculer le noyau (KM) à partir des deux images numériques d'apprentissage et de la carte d'intensité lumineuse.

6. Dispositif (100) de capture d'image pour studio de modélisation tridimensionnelle, comprenant une pluralité d'appareils (C) de prise de vues fonctionnellement connectés à une unité de traitement de données (DTU), **caractérisé en ce que** ladite unité de traitement de données est spécialement adaptée pour mettre en oeuvre le procédé de correction d'un halo selon la revendication 1.

## Patentansprüche

1. Verfahren (400) zum Korrigieren eines Halos (H) in einem zu korrigierenden digitalen Bild (I) einer Szene, das in einem Studio einer dreidimensionalen Modellbildung durch Photogrammetrie mittels einer Bildaufnahmevorrichtung (C1) erfasst wird, die einen Bereich (V) zum Aufnehmen der Szene besitzt, wobei dieser Halo durch die Wechselwirkung eines Lichts, das durch eine Lichtquelle (L3, L4, L5, L6) emittiert wird, mit der Optik der Bildaufnahmevorrichtung erzeugt wird, und sich durch eine Aufhellung von Pixeln des zu korrigierenden digitalen Bildes zeigt, wobei die Lichtquelle Teil eines Beleuchtungssystems der Szene ist, das Verfahren umfassend die Schritte, bestehend aus:
- Erzeugen (410) einer digitalen Lichtintensitätskarte (M), die die Lichtquelle in Bezug auf eine räumliche Verteilung relativ zu dem Bildaufnahmebereich und in Bezug auf eine Lichtintensität kennzeichnet, wie sie von der Bildaufnahmevorrichtung während des Erfassens des zu korrigierenden Bildes (I) wahrgenommen wird, wobei diese Karte eine erste Datenmatrix ausbildet;
- Bereitstellen (420) eines Faltungskerns, der für die Bildaufnahmevorrichtung spezifisch ist, der eine zweite Datenmatrix ausbildet;
- Berechnen (430) eines Faltungsprodukts der ersten Matrix und der zweiten Matrix zum Erhalten einer dritten Datenmatrix, die einer Karte (CVM) von Korrekturwerten des Halos in dem zu korrigierenden digitalen Bild entspricht; und
- Subtrahieren (440) der Korrekturwertkarte Pixel für Pixel von dem zu korrigierenden digitalen Bild zum Erhalten eines korrigierten Bilds (Icorr), in dem der Halo fehlt.

2. Verfahren (400) zum Korrigieren eines Halos nach Anspruch 1, wobei der Schritt des Erzeugens der digitalen Lichtintensitätskarte (M) die Schritte umfasst:
- Erzeugen (412) einer vorläufigen digitalen Lichtintensitätskarte (PM), die die Lichtquelle in Bezug auf die räumliche Verteilung relativ zu dem Bildaufnahmebereich und in Bezug auf die Lichtintensität kennzeichnet, wie sie von der Bildaufnahmevorrichtung wahrgenommen wird, wenn die Lichtquelle von der Bildaufnahmevorrichtung vollständig sichtbar ist; und
- Erzeugen (414, 416) der digitalen Lichtintensitätskarte (M) aus der vorläufigen digitalen Karte (PM) und dem zu korrigierenden digitalen Bild (I), durch Bestimmen der Pixel, die zu der Lichtquelle gehören, in der vorläufigen digitalen Karte, die in dem zu korrigierenden Digitalbild (I) vor der Kamera verborgen sind.

3. Verfahren zum Korrigieren eines Halos nach Anspruch 1 oder 2, wobei der Faltungskern (K) eine Matrix ist, die aus einer Summe einer eindimensionalen Funktion, die eine konstant abnehmende Hüllkurve besitzt und Beiträge von Kerndiffusionsphänomenen darstellt, und einer Funktion erzeugt wird, die zweidimensional ist und Beiträge einer Kernbeugungsfigur darstellt.

4. Verfahren zum Korrigieren eines Halos nach Anspruch 1 oder 2, wobei der Faltungskern (K) eine Matrix ist, die aus einer konstant abnehmenden isotropen Funktion (PF) erzeugt wird.

5. Verfahren zum Korrigieren eines Halos nach einem der Ansprüche 1 bis 4, wobei der Faltungskern mittels der Schritte erzeugt wird:
- Gewinnen (710, 720) eines ersten (LI1) und eines zweiten (LI2) digitalen Trainingsbildes mittels der Bildaufnahmevorrichtung, diese zwei Bilder umfassend jeweils eine ausgeschaltete (Soff) und eine eingeschaltete (Son) Trainingslichtquelle;
- Erzeugen (750) einer Trainingslichtintensitätskarte (LM) der Trainingsquelle aus dem ersten digitalen Trainingsbild, indem ein Lichtintensitätswert den Pixeln dieses zweiten digitalen Bilds zugewiesen wird, das in der Lichtquelle enthalten ist; und
- Berechnen des Kerns (KM) aus den zwei digitalen Trainingsbildern und der Lichtintensitätskarte.

6. Bilderfassungseinrichtung (100) für ein Studio der dreidimensionalen Modellbildung, umfassend eine Vielzahl von Bildaufnahmevorrichtungen (C), die mit einer Datenverarbeitungseinheit (DTU) funktionell verbunden sind, **dadurch gekennzeichnet, dass** die Datenverarbeitungseinheit speziell zum Implementieren des Verfahrens zum Korrigieren eines Halos nach Anspruch 1 angepasst ist.

## Claims

1. A method (400) for correcting a halo (H) in a digital image (I) to be corrected of a scene captured in a three-dimensional modeling studio using photogrammetry by means of a shooting device (C1) having a shooting field (V) of the scene, this halo being generated through the interaction of light emitted by a light source (L3, L4, L5, L6) with the optical unit of the shooting device, and manifesting as a lightening of pixels of the digital image to be corrected, said light source forming part of a lighting system of the scene, the method comprising the steps consisting in:
- generating (410) a digital light intensity map (M) characterizing said light source in terms of spatial distribution relative to the shooting field and in terms of light intensity as it is perceived from the shooting device during the capture of the image (I) to be corrected, this map forming a first data matrix;
- providing (420) a convolution kernel specific to said shooting device, forming a second data matrix;
- calculating (430) a convolution product of the first matrix and the second matrix to obtain a third data matrix corresponding to a corrective value map (CVM) of the halo in the digital image to be corrected; and
- removing (440) the corrective value map from the digital image to be corrected pixel by pixel to obtain a corrected image (Icorr) in which the halo is not present.

2. The halo correction method (400) according to claim 1, wherein the step of generating the digital light intensity map (M) comprises the steps of:
- generating (412) a preliminary digital light intensity map (PM) characterizing said light source in terms of spatial distribution relative to the shooting field and in terms of light intensity as it is perceived from the shooting device when said light source is fully visible from the shooting device; and
- generating (414, 416) said digital light intensity map (M) from the preliminary digital map (PM) and the digital image (I) to be corrected by determining pixels belonging to said light source in the preliminary digital map that are hidden from the camera in the digital image (I) to be corrected.

3. The halo correction method according to claim 1 or claim 2, wherein the convolution kernel (K) is a matrix generated from a sum of a one-dimensional function having a constantly decreasing envelope and representative of contributions from kernel scattering phenomena and a two-dimensional function representative of contributions from a kernel diffraction figure.

4. The halo correction method according to claim 1 or claim 2, wherein the convolution kernel (K) is a matrix generated from a constantly decreasing isotropic function (PF).

5. The halo correction method according to any of claims 1 to 4, wherein the convolution kernel is generated by means of the steps of:
- acquiring (710, 720) a first (LI1) and a second (LI2) digital training image by means of the shooting device, these two images comprising a switched off training light source (Soff) and a switched on training light source (Son) respectively;
- generating (750) a training light intensity map (LM) of the training source from the first digital training image by assigning a light intensity value to the pixels of this second digital image comprised in the light source; and
- calculating the kernel (KM) from the two digital training images and the light intensity map.

6. An image capture device (100) for a three-dimensional modeling studio, comprising a plurality of shooting devices (C) functionally connected to a data processing unit (DTU), **characterized in that** said data processing unit is specially adapted to implement the halo correction method according to claim 1.
